# EUROPEAN PATENT APPLICATION

(11) **EP 2 065 242 A1**
(43) Date of publication of application: **03.06.2009**
(21) Application number: 07792169.0
(22) Date of filing: 08.08.2007
(51) Int. Cl.: B60K 6/24, B60K 6/48, F01N 5/02

(54) **EXHAUST HEAT ENERGY RECOVERY SYSTEM FOR HYBRID VEHICLE**

(30) Priority: 13.09.2006 JP 2006247841
(71) Applicant: Calsonic Kansei Corporation, Saitama-shi Saitama 331-8501 (JP)
(72) Inventor: KIMURA, Satoshi c/o Calsonic Kansei Corporation, 3318501 Saitama (JP); HORI, Ryoichi c/o Calsonic Kansei Corporation, 3318501 Saitama (JP); NAKAJIMA, Shiro c/o Calsonic Kansei Corporation, 3318501 Saitama (JP); MATSUDAIRA, Norimitsu c/o Calsonic Kansei Corp., 3318501 Saitama (JP)
(74) Representative: Oxley, Robin John George
(86) International application number: PCT/JP2007/065501
(87) International publication number: WO 2008/032513

(57) **Abstract**

An exhaust gas thermal energy recovery system of a hybrid electric vehicle includes a second catalytic converter 6, a cooling device 10, a resonance tube 8, control valves V1 and V2 and an electric generating device 9. After an engine 1 is stopped, the control valves V1 and V2 form a loop path 20, and the cooling device 10 cools down an exhaust gas downstream side of the second catalytic converter 6 so as to generate a temperature gradient.

## Description

### [TECHNICAL FIELD]

The present invention relates to an exhaust gas thermal energy recovery system of a hybrid electric vehicle that is capable of driving a hybrid electric vehicle by using an internal combustion engine and an electric motor.

### [BACKGROUND OF THE INVENTION]

Japanese Patent Applications Laid-Open Publication No. 2002 - 122020, No. 2003 - 324932, No. 2005 - 188402 and No. 2005 - 351223 disclose technology of an exhaust gas thermal energy recovery system that recovers thermal energy of an exhaust system for an internal combustion engine as electric energy.
Typically a system for recovering electric power is known: the system includes a thermoacoustic engine having an aggregate of tubules, which is called as a stack (a heat reservoir), so that it can drive a linear motor by vibration of medium, which can vibrate inside the stack according to the temperature gradient of the stack.

### [DISCLOSURE OF THE INVENTION]

### [PROBLEM(S) TO BE SOLVED BY THE INVENTION]

The above-described conventional inventions, however, have a problem in that heat transfer loss becomes larger and the system becomes larger in dimensions because the stack needs to be installed in addition to a catalytic converter that is normally provided in the exhaust system.

The present invention is made to solve the above-described problem, and an object of the present invention is to provide an exhaust gas thermal energy recovery system of a hybrid electric vehicle that can recover electric energy from thermal energy of exhaust gas, by using a compact device with low heat transfer loss.

### [MEANS FOR SOLVING THE PROBLEMS]

According to a first aspect of the present invention there is provided an exhaust gas thermal energy recovery system of a hybrid electric vehicle, including a catalytic converter, a cooling device, a resonance tube, a control valve means and an electric generating device. The catalytic converter is disposed in an exhaust system of an engine of the hybrid electric vehicle. The cooling device cools a part of the catalytic converter. In the resonance tube, one end portion of the resonance tube is connected with an exhaust gas upstream side of the catalytic converter in the exhaust system and the other end portion of the resonance tube is connected with an exhaust gas downstream side of the catalytic converter. The control valve means is provided near the both end portions of the resonance tube so that the control valve means can form a loop path by using the resonance tube and the catalytic converter. The electric generating device is connected with the resonance tube to generate electric power according to reaction of air pressure vibration generated due to a temperature gradient in the catalytic converter. After the engine is stopped, the control valve means forms the loop path and the cooling device cools down the part of the catalytic converter to generate the temperature gradient.

### [EFFECT OF THE INVENTION]

Therefore, in the exhaust gas thermal energy recovery system of the hybrid electric vehicle of the present invention, as described above, the catalytic converter has a function as a stack, so that the stack can be removed. Therefore, the present invention can provide the exhaust gas thermal energy recovery system of the hybrid electric vehicle that can recover the electric energy from the thermal energy of the exhaust gas by using a compact device with the low heat transfer loss.

### [BRIEF DESCRIPTION OF THE DRAWINGS]

The objects, features and advantages of the present invention will become apparent as the description proceeds when taken in conjunction with the accompanying drawings, in which:
FIG. 1 is a diagram showing an exhaust gas thermal energy recovery system of a hybrid electric vehicle of a first embodiment according to the present invention;
FIG. 2 is a diagram illustrating the operation of the exhaust gas thermal energy recovery system of the hybrid electric vehicle of the first embodiment, while an engine is running; and
FIG. 3 is a diagram illustrating the operation of the exhaust gas thermal energy recovery system of the hybrid electric vehicle of the first embodiment after the engine is stopped.

### [DESCRIPTION OF REFERENCE NUMBERS]

- P1: inlet port
- P2: outlet port
- V1, V2, V3: first to third control valve
- 1: engine
- 2: electric motor
- 3: exhaust manifold
- 4a, 4b, 4c: connecting pipe
- 5: first catalytic converter
- 6: second catalytic converter
- 7: muffler
- 8: resonance tube
- 9: electric generating device
- 10: cooling device
- 11, 12: tank
- 13: core part
- 14: heat exchanging part
- 15: pump
- 16a, 16b, 16c, 16d: connecting pipe
- 20: loop path

### [BEST MODE FOR CARRYING OUT THE INVENTION]

Hereinafter, an embodiment of the present invention will be described with reference to the accompanying drawings.

### [FIRST EMBODIMENT]

Hereinafter, an exhaust gas thermal energy recovery system of a hybrid electric vehicle of a first embodiment will be described.

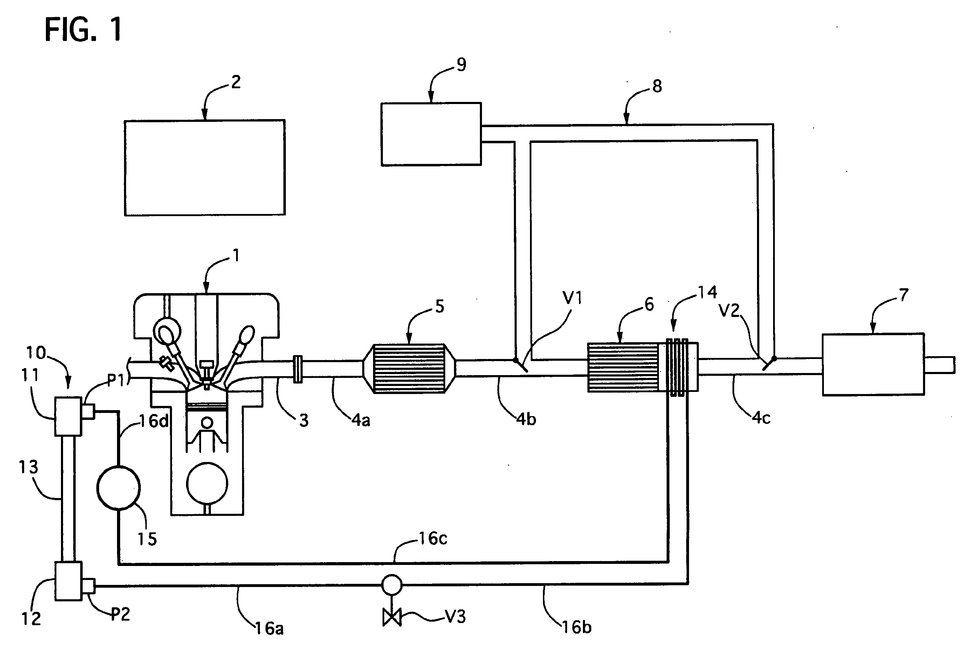

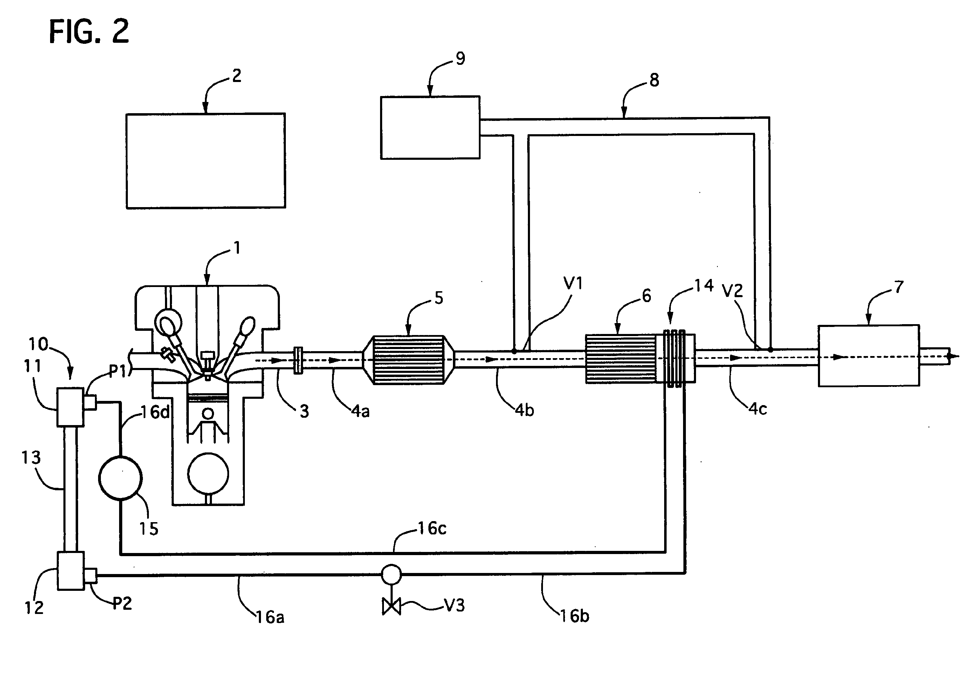

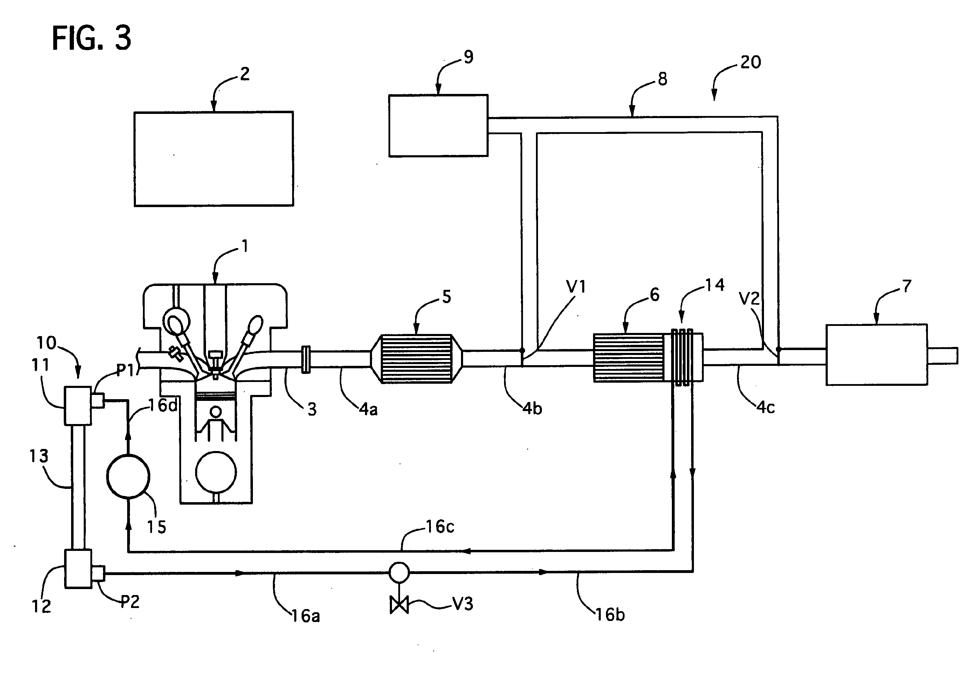

FIG. 1 is a diagram showing the exhaust gas thermal energy recovery system of the hybrid electric vehicle of the first embodiment of the present invention, FIG 2 is a diagram illustrating the operation of the exhaust gas thermal energy recovery system of the hybrid electric vehicle of the first embodiment while an engine is running, and FIG. 3 is a diagram illustrating the operation of the exhaust gas thermal energy recovery system of the hybrid electric vehicle of the first embodiment after the engine is stopped.

First an entire construction of the exhaust gas thermal energy recovery system of the hybrid electric vehicle of the first embodiment will be described.
As shown in FIG 1, a hybrid electric vehicle, which uses an internal combustion engine 1 and an electric motor 2 as a drive unit, is employed as a motor vehicle that is provided with the exhaust gas thermal energy recovery system of the hybrid electric vehicle of the first embodiment.

In addition, as an exhaust system of the engine 1, a first catalytic converter 5, a second catalytic converter 6 and a muffler 7 are connected with each other through connecting pipes 4a to 4c at a exhaust gas downstream side of an exhaust manifold 3.

Each of the catalytic converters 5 and 6 employs, what is called, a metal catalyst carrier or a ceramic catalyst carrier, where, in the metal catalyst carrier, a case thereof contains a main body including an alminum plate, which carries catalyst such as platinum (Pt), with small-pitch corrugation or large-pitch corrugation and a flat alminum plate, where the plates are overlapped with each other and rolled up many times, while, in the ceramic catalyst carrier, a case thereof contains a main body of a honeycomb structure carrying catalyst carrier. Each of the main bodies is formed with a plurality of very small paths that allow the exhaust gas to pass from an exhaust gas upstream side end surface to an exhaust gas downstream side end surface of the main body.

Further, in the first embodiment, the second catalytic converter 6 employs one that can generate the catalytic reaction at a temperature lower than that of the first catalytic converter 5.
Incidentally, the first catalytic converter 5 may be removed.

Further, the connecting pipe 4b is connected with one end portion of a resonance tube 8, while the connecting pipe 4c is connected with the other end portion of the resonance tube 8.
A first control valve V1 is provided at the connecting portion of the resonance tube 8 and the connecting pipe 4b, and a second control valve V2 is provided at the connecting portion of the resonance tube 8 and the connecting pipe 4c.
Incidentally, the first control valve V1 and the second control valve V2 correspond to a control valve means of the present invention.

Further, the resonance tube 8 is provided with an electric generating device 9, which will be later described.
The electric generating device 9 is contained in a not-shown pressure vessel that is communicated with the resonance tube 8. The device 9 employs, what is called, a linear motor type electric generating device that has a movable element reciprocatable by a sound wave produced in the resonance tube 8 to generate electromotive force according to a reciprocating movement of an electric generating coil, which is provided on the movable element, relative to a permanent magnet that is provided on a stator.

Further, the exhaust gas thermal energy recovery system of the first embodiment is equipped with a cooling device 10 that is used for cooling the second catalytic converter.
The cooling device 10 employs a heat exchanger that includes a pair of tanks 11 and 12 and a core part 13 that is arranged between the tanks 11 and 12, as well as a conventional radiator. An inlet port P1 and an outlet port P2 that respectively correspond to the tanks 11 and 12, a third control valve V3, a heat exchanging part 14 and a pump 15 are connected with each other by using connecting pipes 16a to 16d to form like a circular circuit.

Further, the heat exchanging part 14 is formed and arranged to cover around an outer circumferential portion or an inner circumferential portion of the downstream side end portion of the second catalytic converter 6 at a position between the connecting pipes 16b and 16c. Thus, flowing medium that has been cooled down by the cooling device 10 can cool the downstream side end portion of the second catalytic converter 6.

Further, a not-shown radiator for cooling the engine 1 and a not-shown sub-radiator for cooling the electric motor 2 are installed near the cooling device 10.

Next, the operation of the exhaust gas thermal energy recovery system of the first embodiment will be described.
In the thus-constructed exhaust gas thermal energy recovery system, the resonance tube 8 side of a loop path 20 is closed by the first control valve V and the second control valve V2 as shown in FIG. 2 while the engine 1 is running, despite the activation or no-activation of the electric motor 2.
In addition, the third control valve V3 is closed so as to stop the pump 15 of the cooling device 10.
In this operation, the exhaust gas that is discharged, as indicated by a dashed arrow, through the exhaust manifold 3 of the engine 1 is exhausted to an exterior of the vehicle through the first catalytic converter 5, the second catalytic converter 6 and the muffler 7 in order thereof.

Accordingly, the first catalytic converter 5 and the second catalytic converter 6 purify harmful components such as hydrocarbon (HC), carbon monoxide (CO) and nitrogen monoxide (NO) that are contained in the exhaust gas passing through first catalytic converter 5 and the second catalytic converter 6.

While only the electric motor 2 is operated and after the engine 1 is stopped, the first control valve V1 closes the first catalytic converter 5 side of the connecting pipe 4b, and the second control valve V2 closes the muffler 7 side of the connecting pipe 4c so that the resonance tube 8 and the second catalytic converter 6 form the loop path 20 as shown in FIG. 3.
The pump 15 of the cooling device 10 is operated, and the third control valve V3 is opened, so that the flowing medium, which has flown in the tank 11 through the inlet port P1 of the cooling device 10 and is indicated by a dashed arrow, is cooled down due to the heat exchange between the flowing medium and air flow generated while the vehicle is running or air flow generated by a not-shown electric fan, while the flowing medium passes through the core part 13 and flows in the tank 12.

Then, the flowing medium, which has been discharged through the outlet port P2 of the tank 12, cools down the exhaust gas downstream side end portion of the second catalytic converter 6 while it passes through the heat exchanging part 14, and then it is heated up and flows in the inlet port P1 of the cooling device 10 again, thus the flowing medium circulating.

In this operation, the exhaust gas upstream side end portion of the second catalytic converter 6 is heated up by remaining heat of the exhaust gas, and the thermal gradient occurs as the exhaust gas downstream side end portion is cooled down by the cooling device 10. As a result, the air in the resonance tube 8 pressure-vibrates, in other words, the thermo-acoustic self-excited vibration occurs, thereby a sound wave generates in the resonance tube 8 at a certain frequency, 50 to 100 Hz for example.
Incidentally, the heat generated by the engine 1 may be transferred to the upstream side end portion of the second catalytic converter 6 or a downstream side (a second catalytic converter 6 side) of the connecting pipe 4b that is connected with the upstream side end portion by using a heat pipe or the like so that high temperature can be maintained by positively transferring the heat from a high temperature part such as the engine 1.

The electric generating device 9 generates the electric power according to the sound wave, thereby recovering the electric energy from the thermal energy. Incidentally, the electric power that has been generated by the electric generating device 9 is charged to a not-shown battery.

Therefore, in the exhaust gas thermal energy recovery system of the hybrid electric vehicle of the first embodiment, the second catalytic converter 6 also functions as a stack (a heat reservoir), thus enabling the stack to be removed. As a result, the heat transfer loss of the exhaust gas thermal energy can be decreased, and the system can be compact in dimensions.

In addition, in the exhaust gas thermal energy recovery system of the hybrid electric vehicle of the first embodiment, the cooling device 10 cools the exhaust gas downstream side end portion of the catalytic converter, so that the exhaust gas upstream side end portion of the catalytic converter, which can obtain excellent catalytic reaction, is not cooled down. Accordingly, the second catalytic converter 6 can avoid from significant deterioration in the purifying performance of the second catalytic converter 6.

Next, the effects of the exhaust gas thermal energy recovery system of the hybrid electric vehicle of the first embodiment will be described.
As explained above, the exhaust gas thermal energy recovery system of the hybrid electric vehicle of the first embodiment includes the second catalytic converter 6, the cooling device 10, the resonance tube 8, the first and second control valves V1 and V2 and the electric generating device 9. The second catalytic converter 6 is disposed in the exhaust system of the engine 1 of the hybrid electric vehicle. The cooling device 10 cools the exhaust gas downstream side end portion of the second catalytic converter 6. In the resonance tube 8, the one end portion of the resonance tube 8 is connected with the exhaust gas upstream side of the second catalytic converter 6 in the exhaust system and the other end portion of the resonance tube 8 is connected with the exhaust gas downstream side of the second catalytic converter 6. The first and second control valves V1 and V2 are provided near the both end portions of the resonance tube 8 so that the first and second control valves V1 and V2 can form the loop path 20 by using the resonance tube 8 and the second catalytic converter 6. The electric generating device 9 is connected with the resonance tube 8 to generate the electric power according to the reaction of air pressure vibration generated due to the temperature gradient in the second catalytic converter 6. After the engine 1 is stopped, the first and second control valves V1 and V2 form the loop path 20 and the cooling device 10 cools the exhaust gas downstream side end portion of the second catalytic converter 6 to generate the temperature gradient. Therefore, the second catalytic converter 6 can be used as a stack, so that the first embodiment can provide the exhaust gas thermal energy recovery system of the hybrid electric system that is compact in dimensions and can decrease the heat transfer loss.

Although the embodiment has been explained, the present invention is not limited to the above-described embodiment, and its design changes and modifications are contained in the present invention as long as they do not depart from the scope of the present invention.
For example, a pump of the radiator may also function as the pump 15 of the cooling device 10. Similarly, a flowing medium of the radiator may be also used as the flowing medium of the cooling device 10.
In addition, it assumes that a frequency regulator may be provided to the resonance tube 8 as a means for regulating the frequency, for example 50 to 100 Hz, in the resonance tube 8.
Further, the resonance tube 8, the first catalytic converter 5 and the second catalytic converter 6 may form a loop path. In this case, it can provide a large temperature gradient, although the temperature of the first catalytic converter 5 becomes down, and the start-up of the purifying performance of the first catalytic converter 5 becomes late.

## Claims

1. An exhaust gas thermal energy recovery system of a hybrid electric vehicle, comprising:
a catalytic converter that is disposed in an exhaust system of an engine of the hybrid electric vehicle;
a cooling device that cools a part of the catalytic converter;
a resonance tube in which one end portion of the resonance tube is connected with an exhaust gas upstream side of the catalytic converter in the exhaust system and the other end portion of the resonance tube is connected with an exhaust gas downstream side of the catalytic converter;
a control valve means that is provided near the both end portions of the resonance tube so that the control valve means can form a loop path by using the resonance tube and the catalytic converter; and
an electric generating device that is connected with the resonance tube to generate electric power according to reaction of air pressure vibration generated due to a temperature gradient in the catalytic converter, wherein
the control valve means forms the loop path and the cooling device cools the part of the catalytic converter to generate the temperature gradient after the engine is stopped.
